# EUROPÄISCHE PATENTSCHRIFT

(11) **EP 1 007 858 B1**
(45) Veröffentlichungstag und Bekanntmachung des Hinweises auf die Patenterteilung: **03.04.2002**
(21) Anmeldenummer: 99929061.2
(22) Anmeldetag: 30.04.1999
(51) Int. Cl.: F16B 31/04, F16B 31/02

(54) **VERFAHREN UND VORRICHTUNG ZUM HERSTELLEN UND PRÜFEN VON SCHRAUBVERBINDUNGEN**
METHOD AND DEVICE FOR PRODUCING AND CHECKING SCREWED CONNECTIONS
PROCEDE ET DISPOSITIF POUR REALISER ET CONTROLER DES ASSEMBLAGES VISSES

(30) Priorität: 30.04.1998 DE 19819300
(43) Veröffentlichungstag der Anmeldung: 14.06.2000
(73) Patentinhaber: Löffler, Thomas, 83714 Miesbach (DE)
(72) Erfinder: Löffler, Thomas, 83714 Miesbach (DE)
(74) Vertreter: Kern, Gerbert
(86) Internationale Anmeldenummer: DE9901276
(87) Internationale Veröffentlichungsnummer: WO9957446

(56) Entgegenhaltungen:
- DE-C- 4 307 633
- DE-U- 9 303 636
- GB-A- 1 572 152
- US-A- 2 571 265
- US-A- 3 841 193

## Beschreibung

Die Erfindung betrifft ein Verfahren zur Herstellung und Überwachung einer Schraubverbindung mit eng tolerierter Vorspannkraft zwischen einem ersten Bauteil ohne Gewinde und einem zweiten Bauteil mit Gewinde, in das der Gewindeschaft einer Schraube eingreift, deren Schraubenkopf das erste Bauteil an das zweite Bauteil mit vorbestimmter Vorspannkraft preßt. Außerdem betrifft die Erfindung eine Vorrichtung zur Durchführung des Verfahrens und eine Spezialschraube zur Anwendung im erfindungsgemäßen Verfahren.

Die Erfindung kann bevorzugt bei Montageprozessen in der industriellen Produktion, im Werkstattbetrieb und zur Überwachung in der Anlagentechnik beim Vorliegen hoher Sicherheitserfordernisse eingesetzt werden.

Aus dem Stand der Technik ist bekannt, daß in der industriellen Produktion immer häufiger elektronisch gesteuerte Schraubsysteme eingesetzt werden. Diese weisen eine Antriebseinheit und eine Werkzeugspindel mit einem Schraubwerkzeug auf, das eine Schraube mit einem vorbestimmten Moment anzieht, um die miteinander zu verbindenden Teile mit einer vorbestimmten Kraft aneinander zu pressen. Diese Kraft wird als Vorspannkraft bezeichnet und entsteht durch die Längenänderung des Schraubenschaftes, die nachfolgend als Längung bezeichnet wird. Es ist in vielen Anwendungsfällen notwendig, die Vorspannkraft möglichst genau auf einen vorbestimmten Wert einzustellen. Dazu ist es erforderlich, die Vorspannkraft zu bestimmen. Es ist Stand der Technik, die Vorspannkraft indirekt über die Messung des Moments während des Einschraubens zu bestimmen. Zur Herstellung einer Schraubverbindung werden hauptsächlich Drehmoment- bzw. Drehwinkel-Meßsysteme eingesetzt, die in das Schraubsystem integriert sind. Wenn beim Eindrehen der Schraube ein voreingestelltes Drehmoment erreicht ist, wird ein vom Drehmoment-Meßsystem ausgegebenes Signal zur Abschaltung der Antriebseinheit verwendet, oder die Schraube wird noch um einen vorbestimmten Drehwinkel weitergedreht, der durch das Drehwinkel-Meßsystem bestimmt wird.

Bei der indirekten Bestimmung der Vorspannkraft durch die Messung des Drehmoments tritt folgendes Problem auf: Beim Anziehen einer Schraube kommt nur ein geringer Teil des aufgebrachten Drehmoments für die Längung der Schraube, d. h. für die Erzeugung der Vorspannkraft, zur Wirkung. Der größere Teil des Drehmoments wird durch die Reibung am Schraubengewinde und am Schraubenkopf aufgenommen. Ändern sich die Reibungsbedingungen, wirken sich diese Änderungen stark auf die Vorspannkraft aus. Daher können die vorstehend beschriebenen Vorrichtungen die Einhaltung enger Toleranzen der Vorspannkraft nicht gewährleisten.

Zur Überwindung dieser Schwierigkeiten ist es erforderlich, die Vorspannkraft direkt zu messen. Dazu sind verschiedene Verfahren und Vorrichtungen vorgeschlagen worden. So ist bekannt, unter dem Schraubenkopf einen Meßring in Form einer Unterlegscheibe anzuordnen. Dieser Meßring ist ein Sensor, der bei Krafteinwirkung ein elektrisches Signal abgibt. Wird die Schraube angezogen, drückt der Schraubenkopf auf den Meßring, wobei die Vorspannkraft direkt gemessen werden kann. Dieses Verfahren ist sehr kostenintensiv, da der Meßring nach dem Anziehen der Schraubverbindung unter dem Schraubenkopf verbleibt. Daher ist dieses Verfahren nur auf besondere Anwendungsfälle, wie z. B. auf die Raumfahrt oder auf die Kernenergietechnik, beschränkt. Eine kontinuierliche Langzeitüberwachung der Anpreßkraft ist mit Meßringen nur bedingt möglich, da diese eine unkontrollierbare Nullpunktdrift aufweisen

Eine weitere Möglichkeit zur Bestimmung der Vorspannkraft ist in der DE 4410722 beschrieben. Es wird eine Vorrichtung zur Bestimmung der Vorspannkraft beschrieben, wobei der Abstand zwischen einer wechselstromdurchflossenen Spule und dem Schraubenkopf einer Schraube bestimmt wird, der sich beim Anziehen ändert. Diese Abstandsänderung wird gemessen. Sie ist näherungsweise proportional der Vorspannkraft. Längenänderungen, die aufgrund plastischer Verformungen im Schaft entstehen, können nicht erfaßt werden. Die zu messenden Längen sind so klein, daß dieses Verfahren unter rauhen Produktionsbedingungen kaum oder nur mit erheblichem technischen Aufwand einsetzbar ist.

In der DE 4017726 wird eine Befestigungsschraube mit einem zumindest teilweise mit einem Gewinde versehenen Schaft und einem Betätigungsende beschrieben, an dem ein Kopf, ein Stiftansatz oder dgl. vorgesehen ist, wobei am Betätigungsende der Befestigungsschraube eine erste Endfläche und am freien Ende des Schafts eine zweite Endfläche ausgebildet sind, und an beiden Endflächen Meßflächen für eine Ultraschallmessung vorgesehen sind, die sich nur über einen Teil der Endflächen erstrecken und zu den Endflächen im Sinne einer Erhöhung und/oder Vertiefung axial versetzt angeordnet sind. Bei dieser Vorrichtung wird mittels Ultraschall die Längenänderung der Schraube gemessen. Aus den Materialkennwerten und den geometrischen Abmessungen der Schraube wird mittels dem Fachmann bekannter Verfahren die Vorspannkraft direkt ermittelt. Auf dem gleichen Prinzip basieren die Gegenstände der Patentanmeldungen DE 19507391 und DE 4025430. Die Bestimmung der Längenänderung der Schraube mittels Ultraschall weist jedoch auch Nachteile auf. Um die Längenänderung genau zu erfassen, muß der Ultraschall definiert in die Schraube eingeleitet werden. Die dabei zu lösenden technischen Probleme sind erheblich. So ist es erforderlich, die Schalleinleitungsfläche und die Reflexionsfläche besonders auszubilden. Weiterhin ist erforderlich, daß diese Flächen mit hoher Präzision gefertigt und eng toleriert sind. Normschrauben können diesen Ansprüchen nicht genügen. Schrauben werden mittels hocheffektiver Verfahren als Massenteile gefertigt. Für die Fertigung von Schrauben mit Ultraschalleinleitungsflächen stehen keine vergleichbaren Verfahren zur Verfügung. Daher sind die Fertigungskosten für diese Spezialschrauben beträchtlich.

Weiterhin ist ein Verfahren bekannt, bei dem die Schraube durch die zu verbindenden Teile gesteckt und anschließend eine Mutter aufgeschraubt wird. Der Gewindebolzen der Schraube ragt dabei mit seinem Endabschnitt über die Mutter hinaus. Dieser Endabschnitt wird mit einer geeigneten Vorrichtung erfaßt und in Richtung des Endabschnitts gezogen. Die Vorrichtung stützt sich dabei auf dem Blech ab, auf dem später auch die Mutter aufliegt. Die Schraube wird nun von der Vorrichtung mit einer bestimmten Kraft, die sehr genau bestimmt werden kann, vorgespannt. Die Mutter kann nahezu momentenfrei bis zur Kopfauflage aufgeschraubt werden. Wenn die Vorrichtung danach entfernt wird, zieht der gedehnte Schraubenschaft über den Schraubenkopf und die Mutter die Teile mit der vorgespannten Kraft zusammen. Für dieses Verfahren sind demnach immer Schraube und Mutter erforderlich. Eine Automatisierung ist deshalb schwierig.

In US - A - 3 841 193 ist ein Verfahren, eine Vorrichtung und eine Spezialschraube der anfangs angegebenen Art beschrieben. Dementsprechend ist eine Spezialschraube mit einem Schraubenkopf und einer Überwurfmutter erforderlich, die den Schraubenkopf umschließt und in ein am Schraubenkopf befindliches Außengewinde eingreift. Zwischen der Überwurfmutter und einem ersten Bauteil befindet sich eine Art von Pneumatik- oder Hydraulik-Zylinder, in dem der Schraubenkopf und ein Teil des Schraubenschaftes dichtend verschiebbar eingesetzt sind. Zwischen Schraubenkopf und Zylinder kann ein Fluid unter Druck eingeführt und so die Schraube durch Schub in eine bestimmte Vorspannung versetzt werden, die sich danach mittels der Überwurfmutter durch Nachschrauben derselben auch bei nachlassendem Fluiddruck aufrechterhalten läßt. Der Schraubenkopf und die wichtigsten Teile einer Schraubenkopfschubvorrichtung sind also untrennbar miteinander verbunden und für eine Massenherstellung der Spezialschraube zu aufwendig.

Aus der DE-C-4 307 633 ist eine Schraube zum Festlegen eines Markraumnagels bekannt, die ein selbstschneidendes Gewinde am Schraubenschaft sowie ein entgegengesetzt drehendes Gewinde sowie Schlüsselflächen am Schraubenkopf aufweist. Für die Anwendung im erfindungsgemäßen Verfahren ist solch eine Schraube allerdings nicht geeignet.

Der vorliegenden Erfindung liegt die Aufgabe zugrunde, die Nachteile im bekannten Stand der Techniuk zu überwinden und mit geringem materiellem und verfahrenstechnischem Aufwand zuverlässig eine Schraubverbindung mit genau bestimmter Vorspannkraft herzustellen.

Die wesentlichen Merkmale der erfindungsgemäßen Lösung dieser Aufgabe gehen aus den beigefügten Patentansprüchen hervor. Die abhängigen Patentansprüche betreffen besonders vorteilhafte Ausführungsarten der Erfindung.

Der Hauptvorteil des erfindungsgemäßen Verfahrens gemäß Patentanspruch 1 besteht darin, daß die Vorspannkraft durch Zug an einem einstückig herstellbaren Schraubenkopf direkt aufgebracht und gemessen wird und nahezu frei von Meßfehlern ist, die sonst unter der Wirkung der Reibung im Gewinde bzw. am Schraubenkopf auftreten würden.

Vorteilhaft wird das Schraubwerkzeug mittels eines regelbaren Antriebs angetrieben. Diese Ausführungsform wird vorzugsweise in der automatischen Montage eingesetzt. Die Schraube kann unter Umständen besonders preiswert mittels, eines handbetätigten Werkzeugs eingeschraubt werden. Diese Ausführungsform des Verfahrens erlaubt die Herstellung von Schraubverbindungen mit eng tolerierter Vorspannkraft im Werkstattbereich, wo vorzugsweise bei Reparaturen Schraubverbindungen von Hand gelöst bzw. angezogen werden. Ein weiteres Einsatzgebiet ist die Montage in der Luft- und Raumfahrttechnik oder in der Reaktortechnik, wo Schraubverbindungen hoher Präzision herzustellen sind.
Es ist möglich, die gemessene Vorspannkraft mit aus dem Stand der Technik bekannten Meßgrößen, wie z. B. Drehmoment, Drehwinkel und/oder Einschraubtiefe, zu kombinieren. Bei Bedarf ist es auch möglich, mehr als zwei Meßgrößen zu kombinieren.

Zur Durchführung des erfindungsgemäßen Verfahrens wird eine erfindungsgemäße Vorrichtung eingesetzt, die wie die Vorrichtung nach US - A - 3 841 193 eine Vorrichtung zum Erzeugen einer axialen Zugkraft im Schraubenschaft unabhängig von der Drehung des Schraubenkopfes aufweist. Die axiale Zugkraft wird aber nicht durch Schub an einem zum Pneumatik- oder Hydraulikkolben ausgebildeten Schraubenkopf sondern erfindungsgemäß durch eine vom Schraubenkopf völlig ablösbare Schraubenkopf-Zugvorrichtung erzeugt, die zum kraft- und/oder formschlüssigen Greifen des Schraubenkopfes ausgebildet ist. Die wesentlichen Merkmale der erfindungsgemäßen Vorrichtung sind im beigefügten Patentanspruch 5 angegeben.

Die erfindungsgemäße Spezialschraube ist zur Anwendung im Verfahren nach Patentanspruch 1 mittels der Vorrichtung nach Patentanspruch 5 dieser Vorrichtung angepaßt. Ihr Schraubenkopf weist eine an einem Schraubenschaft angrenzende Kopfauflage zum Abstützen auf der außenliegenden Oberfläche eines ersten Bauteils , außerdem Schlüsselflächen zur Übertragung eines Drehmoments und mindestens eine Zugkraft-Ausnehmung mit zur Schraubenachse quer ausgerichteten Flächen auf. Die erfindungsgemäße Spezialschraube ist dadurch gekennzeichnet, daß die Zugkraft-Ausnehmung zu einer Greifvorrichtung der Schraubenkopf-Zugvorrichtung komplementär ausgebildet und mit der Schraubenkopf-Zugvorrichtung in Zug-Kraftwirkbeziehung bringbar ist. Die Zugkraft-Ausnehmung kann vorteilhaft in einem Außengewinde oder einem Innengewinde oder einem Ringflansch am Schraubenkopf bestehen. Das Gewinde am Schraubenkopf weist gegebenenfalls zweckmäßig gleiche Steigung wie das Gewinde am Schraubenschaft auf. Es kann ein Bewegungsgewinde sein.

Weitere Maßnahmen und Vorteile der Erfindung ergeben sich aus der nachfolgenden Beschreibung der Ausführungsbeispiele in Verbindung mit den beigefügten schematischen Zeichnung.

Fig. 1 zeigt eine erste Ausführungsform einer erfindungsgemäßen Spezialschraube.

Fig. 2 zeigt eine zweite Ausführungsform der erfindungsgemäßen Spezialschraube.

Fig. 3 zeigt eine erfindungsgemäße Vorrichtung mit kombinierter Zug-Schraubvorrichtung im Einsatz an einer erfindungsgemäßen Spezialschraube.

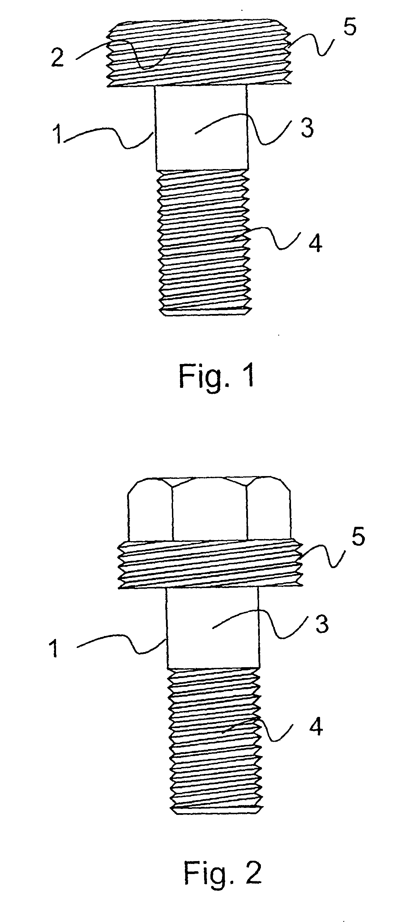

Die Fig. 1 zeigt eine erste Ausführungsform der erfindungsgemäßen Spezialschraube 1 mit einem Schraubenkopf 2, einem gewindelosen Schaftabschnitt 3, einem Gewindeschaft 4 und einem Kopfgewinde 5 am Schraubenkopf 2. Fig. 2 zeigt eine zweite Ausführungsform der erfindungsgemäßen Spezialschraube 1. Die Spezialschraube 1 weist Schlüsselflächen für einen Außenkraftangriff auf. Nunmehr wird eine erste Variante der Herstellung einer Schraubverbindung beschrieben:

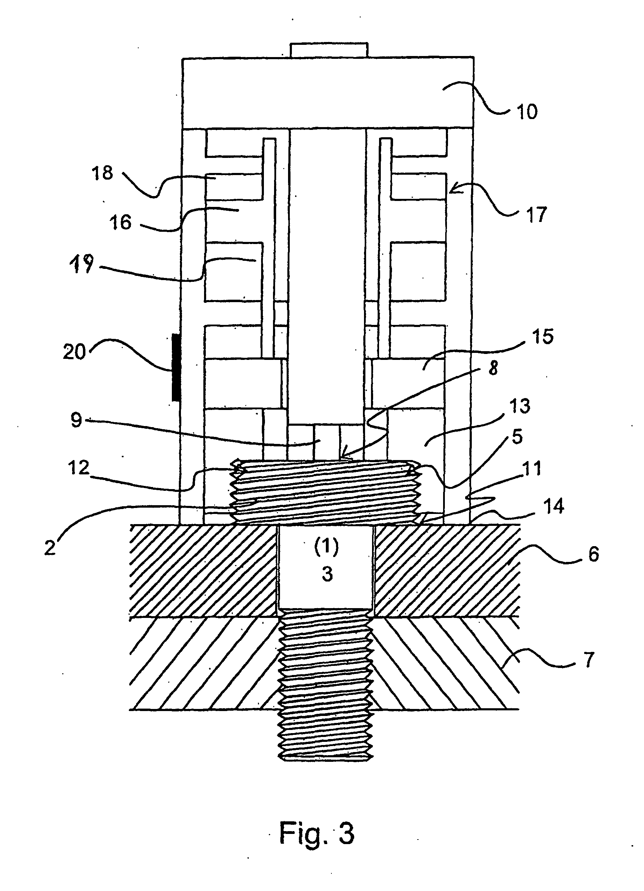

Gemäß Fig. 3 sind zwei Bauteile 6 und 7 zu verbinden. Es ist eine Spezialschraube 1 mit einem Kopfgewinde 5 und einem Innensechskant 8 als Verbindungselement vorgesehen. Die Spezialschraube 1 wird mittels eines zum Innensechskant 8 passenden Werkzeugs 9 mittels einer Antriebseinrichtung 10 bis zur Kopfauflage 1 1 eingedreht, wobei sichergestellt wird, daß noch nicht die für diese Schraubverbindung zu erreichende Vorspannkraft erreicht wird.

Dann wird eine Schraubenkopf-Zugvorrichtung 12 auf den Schraubenkopf 2 mit dem Kopfgewinde 5 geschraubt. Falls erforderlich, kann die Spezialschraube 1 am Innensechskant fixiert werden. Die Schraubenkopf-Zugvorrichtung 12 besteht aus einem Zugkopf 13, einem Abstützring 14, einer Antriebsvorrichtung 15 zum Drehen des Zugkopfs 13 und einem Hydraulikkolben 16, der sich in einem Zylinder 17 mit Kammern 18 und 19 aufwärts und abwärts bewegen kann und mit dem Zugkopf 13 verbunden 5 ist. Wenn die Kammer 18 mit Druck beaufschlagt wird, bewegt sich der Hydraulikkolben 16 nach oben und zieht mit dem Zugkopf 13 mit einer vorbestimmten Kraft F1 an dem Schraubenkopf 2, bis im Schaftabschnitt 3 der Spezialschraube 1 die vorgesehene Vorspannung erreicht ist. Gleichzeitig wird der Abstützring 14 mit der Kraft F1 auf das Bauteil 6 gedrückt. Die Kraft F1 wird mittels Dehnungsmeßstreifen 20 sehr genau gemessen, die in diesem Ausführungsbeispiel am Außenumfang des Abstützrings 14 angeordnet sind. Die Dehnungsmeßstreifen 20 können an Stellen angeordnet werden, die nach konstruktiven und meßtechnischen Gesichtspunkten vom Fachmann auszuwählen sind. Nun wird die Spezialschraube 1 unter der Vorspannung bis zur Kopfauflage 1 1 eingedreht, wobei in diesem Ausführungsbeispiel mit einem Drehmomentenmeßgerät die Kopfauflage 1 1 festgestellt wird. Die Kopfauflage 1 1 kann auch mit anderen Mitteln festgestellt werden, so z. B. über die Stromaufnahme der Antriebseinrichtung 10. Danach wird der im Hydraulikzylinder 17 wirkende Hydraulikdruck gesenkt und die Schraubenkopf-Zugvorrichtung 12 abgeschraubt.

## Patentansprüche

1. Verfahren zur Herstellung und Überwachung einer Schraubverbindung mit eng tolerierter Vorspannkraft zwischen einem ersten Bauteil (6) ohne Gewinde und einem zweiten Bauteil (7) mit Gewinde, in das der Gewindeschaft (4) einer Schraube (1) eingreift, deren Schraubenkopf (2) das erste Bauteil an das zweite Bauteil mit vorbestimmter Vorspannkraft preßt, **gekennzeichnet durch** folgende Verfahrensschritte:
- Eindrehen der Schraube (1) mittels eines Eindrehwerkzeugs (9) und Anhalten des Eindrehvorgangs vor Erreichen der erforderlichen Vorspannkraft und Ansetzen einer sich auf der Oberfläche des ersten Bauteils (6) abstützenden Schraubenkopf-Zugvorrichtung (12), um den Schraubenkopf (2) in Kopfrichtung axial ziehen zu können,
- Ziehen des Schraubenkopfes (2) mittels der Schraubenkopf-Zugvorrichtung (12) in axialer Richtung, bis die erforderliche Vorspannkraft erreicht ist, und Halten der erforderlichen Vorspannkraft,
Fortsetzen des Eindrehens der Schraube (1) unter Beibehaltung der erforderlichen Vorspannkraft bis zur Kopfauflage (11), wobei nach vorbestimmten Kriterien ermittelt wird, wann die Kopfauflage (11) erreicht ist und wann der Einschraubvorgang zu beenden ist.

2. Verfahren nach Patentanspruch 1, **dadurch gekennzeichnet, daß** das Eindrehwerkzeug (9) von einer regelbaren Antriebseinrichtung (10) angetrieben wird.

3. Verfahren nach Patentanspruch 1, **dadurch gekennzeichnet, daß** die Schraube (1) mit einem Handschrauber (9) als Eindrehwerkzeug eingeschraubt wird.

4. Verfahren nach einem der Patentansprüche 1 bis 3, **dadurch gekennzeichnet, daß** neben der Bestimmung der Vorspannkraft die Schraubverbindung zusätzlich über die Messung des Drehwinkels und/oder des Drehmoments überwacht wird.

5. Vorrichtung zur Durchführung des Verfahrens nach einem der vorhergehenden Ansprüche 1 bis 4, mit einer Vorrichtung zum Erzeugen einer bestimmbaren axialen Zugkraft im Schraubenschaft (3, 4) unabhängig von der Drehbewegung des Schraubenkopfes (2),
mit einer Einschraubvorrichtung (9) zum Übertragen eines Drehmoments auf den Schraubenkopf (2);
mit einer Schraubenkopf-Zugvorrichtung (12) zum kraft- und/oder formschlüssigen Greifen des Schraubenkopfes (2)und Übertragen einer axialen Zugkraft auf den Schraubenkopf, mit einer Stützfläche zum Abstützen an der außenliegenden Oberfläche des ersten Bauteils (6);
und
mit einer Steuereinrichtung zum Steuern der Drehung des Schraubenkopfes mittels der Einschraubvorrichtung (9)
**gekennzeichnet durch**
eine Kraftmeßvorrichtung (20) mit elektrischer Meßwertbereitstellung zum direkten oder indirekten Messen der auf den Schraubenkopf übertragenen Zugkraft in Bezug auf die Abstützung an der außenliegenden Oberfläche des ersten Bauteils (6) ; und
eine elektronische Datenverabeitungseinheit zur Bereitstellung von Steuersignalen in Funktion der Kraftmeßwerte.

6. Vorrichtung nach Patentanspruch 5, **dadurch gekennzeichnet, daß** die Schraubenkopf-Zugvorrichtung (12) mit der Einschraubvorrichtung (9) in einer Zug- und Schraubvorrichtung kombiniert ist.

7. Vorrichtung nach Patentanspruch 6, **dadurch gekennzeichnet, daß** die Zug- und Schraubvorrichtung zum Aufschrauben auf einem Schraubenkopf (2) mit Außengewinde ausgebildet ist.

8. Vorrichtung nach Anspruch 6, **dadurch gekennzeichnet, daß** die Zug- und Schraubvorrichtung zum Einschrauben in einen Schraubenkopf (2) mit Innengewinde ausgebildet ist

9. Vorrichtung nach Patentanspruch 5, **dadurch gekennzeichnet, daß** die Schraubenkopf-Zugvorrichtung (12) zum Greifen an einem Schraubenkopf ausgebildet ist.

10. Vorrichtung nach einem der Patentansprüche 5 bis 9, **dadurch gekennzeichnet, daß** eine Zugkraft-Regeleinrichtung vorgesehen ist, mit der die Zugkraft gleichmäßig erhalten werden kann.

11. Spezialschraube zur Anwendung im Verfahren nach Anspruch 1 mittels der Vorrichtung nach Anspruch 5, mit Schraubenschaft (3, 4) und Schraubenkopf (2), der eine am Schraubenschaft angrenzende, Kopfauflage (11) zum Abstützen auf der außenliegenden Oberfläche des ersten Bauteils (6), außerdem Schlüsselflächen zur Übertragung eines Drehmoments und mindestens eine Ausbildung aufweist, die mit der Vorrichtung nach Anspruch 5 in Zug-Kraftwirkbeziehung bringbar ist, wobei
die Ausbildung (5) zu einer Greifvorrichtung (13) der Schraubenkopf-Zugvorrichtung (12) komplementär ausgebildet ist.

12. Spezialschraube nach Patentanspruch 11, **dadurch gekennzeichnet, daß** die Zugkraft-Ausnehmung aus einem Außengewinde (5) oder aus einem Innengewinde am Schraubenkopf (2) besteht.

13. Spezialschraube nach Anspruch 12, **dadurch gekennzeichnet, daß** das Gewinde (5) am Schraubenkopf (2) gleiche Steigung wie das Gewinde am Gewindeschaft (4) aufweist.

14. Spezialschraube nach Anspruch 12 oder 13, **dadurch gekennzeichnet, daß** das Kopfgewinde ein Bewegungsgewinde ist.

15. Spezialschraube nach Anspruch 11, **dadurch gekennzeichnet, daß** die Zugkraft-Ausnehmung einen Ringflansch bildet.

## Claims

1. A method of producing and checking a screw connection under the effect of a predetermined initial tension force to be defined with small tolerance between a first part (6) without thread, and a second part (7) having a thread in which the threaded portion of the shaft (4) of a screw (1) is engaged, a screw head (2) of said screw (1) pressing the first part (2) to the second part (7) with said predetermined initial tension force, **characterized by** the following process steps:
- tightening the screw (1) by means of a screw tightening tool (9) and stopping the tightening process before reaching the required initial tension force and positioning a screw head pulling device (12) which is supported on the surface of the first part (6) to be able to pull the screw head (2) axially in the direction of the head,
- pulling the screw head (2) by means of the screw head pulling device (12) in the axial direction until reaching the required initial tension force, and holding the required initial tension force,
- continuing the tightening of the screw (1) while maintaining the required initial tension force until achieving head contact (11), where predetermined criteria are used to determine when head contact (11) is achieved and when the screwing operation is to be concluded.

2. A method according to claim 1, **characterized in that** the screwing device is driven by a variable-speed drive unit (10).

3. A method according to claim 1, **characterized in that** the screw (1) is screwed in with a manual screwdriver (9).

4. A method according to claims 1 through 3, **characterized in that** the screwed connection is also checked by measuring the angle of rotation and/or the torque in addition to determining the initial tension force.

5. A device for carrying out the method according to one of the preceding claims 1 to 4, comprising a device for producing a predetermined axial tension force within the screw shaft (3, 4) independent from rotational movement of the screw head (2), comprising further a screw tightening device (9) for producing torque on the screw head (2), and a screw head pulling device (12) for seizing the screw head (2) in a force-engaged and/or form-fitting manner and for pulling the screw head (2) in an axial direction, said screw head pulling device (12) comprising a supporting surface to rest on the outer surface of the first part (6), the device carrying out said method moreover comprising a control unit for controlling rotation of the screw head (2) by means of the screw tightening device (9), **characterized by:**
- a pulling force measuring device (20) supplying measured electric values for direct or indirect measurement of the pulling force acting on the screw head (2) corresponding to the supporting force effected between said supporting surface and said outer surface of the first part (6), and
- an electronic data processing unit for producing controlling signals as a function of the electric values of said pulling force measuring device.

6. A device according to claim 5, **characterized in that** the screw head pulling device (12) and the screw tightening device (9) are combined in a pulling and tightening device.

7. A device according to claim 6, **characterized in that** the pulling and tightening device is designed for screwed connection with the screw head (2) having an outside thread.

8. A device according to claim 6, **characterized in that** the pulling and tightening device is designed for screwed connection with the screw head (2) having an inside thread.

9. A device according to claim 5, **characterized in that** the screw head pulling device (12) is designed for gripping the screw head (2).

10. A device according to one of claims 6 to 9, **characterized in that** a tensile force regulating device is provided with which the tensile force can be maintained uniformly.

11. A special screw (1) for carrying out the method according to claim 1 by means of the device according to claim 5, comprising screw shaft (3, 4) and a screw head (2) with a head rest adjacent to the screw shaft for resting on the outer surface of the first part (6), and with key rests for the transmission of torque, the screw head (29 further having at least one design which can be brought into tensile force transmitting connection with the device according to claim 5, whereby
said design (5) is complementary to a screw head sizing tool (13) of the screw head pulling device.

12. A special screw (1) according to claim 11, **characterized in that** the design for tensile force transmitting connection consists in a outside or inside thread on the screw head (2).

13. A special screw (1) according to claim 12, **characterized in that** the thread on the screw head (2) has the same pitch as the thread on the threaded portion (4) of the screw shaft (3).

14. A special screw (1) according to claim 11, **characterized in that** the design on the screw head (2) is a moving thread.

15. A special screw (1) according to claim 11, **characterized in that** the design on the screw head (2) is a tensile force recess in form of a ring flange.

## Revendications

1. Un procédé pour la fabrication et le contrôle d'une connexion à vis, subissant une force de précontrainte de faible tolérance, entre une première pièce (6) sans filetage et une deuxième pièce (7) filetée dans laquelle s'engage la tige filetée (4) d'une vis (1) dont la tête (2) serre la première pièce sur la deuxième pièce avec une force de précontrainte prédéterminée, **caractérisé par** une procédure dont les étapes sont les suivantes :
- serrer la vis (1) à l'aide d'un outil de serrage (9) et arrêt de l'opération de serrage avant que la force de précontrainte requise ne soit atteinte et positionner un dispositif d'extraction de tête de vis (12) pour opérer sur la tête de vis (2) une traction axiale en direction de la tête,
- opérer sur la tête de vis (2), au moyen du dispositif d'extraction de tête de vis (12), une force de traction axiale jusqu'à ce que la force de précontrainte requise soit obtenue, et maintenir la force de précontrainte requise,
- continuer à serrer la vis (1) tout en maintenant la force de précontrainte requise jusqu'à toucher la tête (11), sachant qu'à l'aide de critères prédéterminés on vérifie à quel moment le contact avec la tête (11) est réalisé et à quel moment l'opération de vissage doit être achevée.

2. Procédé selon la revendication 1, **caractérisé par le fait que** l'outil de serrage (9) est commandé par un mécanisme moteur (10) à vitesse variable.

3. Procédé selon la revendication 1, **caractérisé par le fait que** la vis (1) est serrée à l'aide d'une visseuse manuelle (9) servant d'outil de serrage.

4. Procédé selon l'une des revendications 1 à 3, **caractérisé par le fait qu'**additionnellement à la définition de la force de précontrainte, le système de vissage est surveillé également au moyen de la mesure de l'angle de rotation et/ou du couple.

5. Un dispositif permettant d'exécuter le procédé selon l'une des revendications précitées 1 à 4, comprenant un dispositif pour générer une force axiale prédéterminable à l'intérieur de la tige de vis (3, 4) indépendamment du mouvement de rotation de la tête de vis (2), comprenant d'autre part un système de vissage (9) permettant de transmettre un couple à la tête de vis (2), un dispositif d'extraction de la tête de vis (12) permettant de saisir, dans le cadre d'une liaison mécanique et/ou à friction, la tête de la vis (2) et de lui transmettre une force axiale, ledit dispositif comprenant une surface support permettant de reposer sur la surface externe de la première pièce (6) et un dispositif de commande pour piloter la rotation de la tête de vis au moyen du système de vissage (9), **caractérisé par**
- un dispositif de mesure de la force de traction (20) fournissant des valeurs mesurées électriques, pour mesurer directement ou indirectement la force de traction exercée sur la tête de la vis par rapport à la force de support exercée au niveau de la surface externe de la première pièce (6) et
- une unité de traitement électronique des données pour fournir des signaux de contrôle en fonction des valeurs de force mesurées.

6. Dispositif selon la revendication de brevet 5, **caractérisé par le fait que** le dispositif d'extraction de tête de vis (12) est combiné avec le système de vissage (9) dans un système d'extraction-vissage.

7. Dispositif selon la revendication de brevet 6, **caractérisé par le fait que** le système d'extraction-vissage est conçu de façon à pouvoir être vissé sur une tête de vis (2) dotée d'un filetage mâle.

8. Dispositif selon la revendication 6, **caractérisé par le fait que** le système d'extraction-vissage est conçu de façon à pouvoir être vissé sur une tête de vis (2) dotée d'un filetage femelle.

9. Dispositif selon la revendication de brevet 5, **caractérisé par le fait que** le système d'extraction-vissage (12) est conçu de façon à pouvoir saisir la tête de vis.

10. Dispositif selon l'une des revendications de brevet 5 à 9, **caractérisé par le fait qu'**il prévoit un système de réglage de la force de traction permettant de maintenir une force de traction régulière.

11. Une vis spéciale destinée à être utilisée dans le procédé décrit selon la revendication 1 au moyen du dispositif selon la revendication 5, comprenant une tige de vis (3, 4) ainsi qu'une tête de vis (2) ayant une surface support (11) adjacente à la tige de vis pour reposer sur la surface externe de la première pièce (6), d'autre part avec des pans d'écrou permettant de transmettre un couple, la tête de vis présentant au moins une configuration pouvant être disposée, selon la revendication 5, dans un rapport de force dynamique par rapport au dit dispositif, ladite configuration en forme de système de préhension (13) étant complémentaire au dispositif d'extraction de tête de vis (12).

12. Une vis spéciale selon la revendication de brevet 11, **caractérisée par le fait que** la configuration prévue pour exercer la force de traction est constitué d'un filetage mâle (5) et d'un filetage femelle au niveau de la tête de la vis (2).

13. Une vis spéciale selon la revendication 12, **caractérisée par le fait que** le filetage (5) de la tête de vis (2) présente le même pas que le filetage du segment fileté (4) de la tige de vis (3).

14. Une vis spéciale selon la revendication 12 ou 13, **caractérisée par le fait que** le filetage de la tête de vis est un filetage mobile.

15. Une vis spéciale selon la revendication 11, **caractérisée par le fait que** la configuration prévue pour exercer la force de traction forme une bride annulaire.
